Europäisches Patentamt

European Patent Office

Office européen des brevets

(19)

(11) Veröffentlichungsnummer: **0 164 591**
**B1**

(12) **EUROPÄISCHE PATENTSCHRIFT**

(45) Veröffentlichungstag der Patentschrift: **07.11.90**

(21) Anmeldenummer: **85105863.6**

(22) Anmeldetag: **13.05.85**

(51) Int. Cl.⁵: **G 01 N 15/06**, G 01 N 1/24

(54) **Verfahren zur Langzeitbestimmung und Dauerüberwachung des Schadstoffgehaltes von feststoffbeladenen Abgasströmen.**

(30) Priorität: **14.06.84 DE 3422062**

(43) Veröffentlichungstag der Anmeldung:
**18.12.85 Patentblatt 85/51**

(45) Bekanntmachung des Hinweises auf die
Patenterteilung:
**07.11.90 Patentblatt 90/45**

(84) Benannte Vertragsstaaten:
**AT BE CH FR GB IT LI NL SE**

(56) Entgegenhaltungen:
DE-A-2 853 615
US-A-3 070 990
US-A-3 482 432

STAUB-REINHALTUNG LUFT, Band 27, Nr. 10,
Oktober 1967, Seiten 445-447; Dr. K. AURAND et
al.: "Gerät zur kontinuierlichen Bestimmung der
Konzentration staubförmiger
Luftverunreinigungen"

(73) Patentinhaber: **KERNFORSCHUNGSZENTRUM
KARLSRUHE GMBH
Weberstrasse 5 Postfach 3640
D-7500 Karlsruhe 1 (DE)**

(72) Erfinder: **Maul, Sonja
Straubenhardtstrasse 16
D-7541 Straubenhardt 3 (DE)**
Erfinder: **Büttner, Erwin
Im Kirchfeld 15b
D-7513 Stutensee 1 (DE)**
Erfinder: **Meichelböck, Heiner
Pfinzstrasse 10
D-7514 Eggenstein-Leopoldshafen 2 (DE)**
Erfinder: **Merz, Albert, Dr.
Breslauer Strasse 56c
D-7500 Karlsruhe 1 (DE)**
Erfinder: **Vogg, Hubert, Prof. Dr.
De-Coster-Strasse 2
D-7500 Karlsruhe (DE)**

EP 0 164 591 B1

# Beschreibung

Die vorliegende Erfindung betrifft ein Verfahren zur Langzeitbestimmung und Dauerüberwachung des Schadstoffgehaltes von feststoffbeladenen Abgasströmen nach dem Oberbegriff des Patentanspruches 1.

Bekannt sind bisher kurzzeitige stichprobenartige Teilstromentnahmen mit einer für Emissionsbilanzen ungenügenden Aussageschärfe. Derartige Momentaninformationen sind für eine belastbare Langzeitbilanz und zur Dauerüberwachung ungeeignet. Vielmehr müssen verläßliche Durchschnittswerte pro Tag, Monat und Jahr zur Verfügung stehen, die sämtliche, auch kurzzeitig auftretende Schadstoffemissionen beinhalten.

Aus der US-A-3 070 990 ist eine Pobensammeleinrichtung und ein Verfahren bekann, durch welches mit Hilfe der Probensammelvorrichtung Gasanalysen durchgeführt werden sollen. Die Sammelvorrichtung bedient sich dabei eines Zyklones, mittels welchem die zu untersuchenden Partikel abgeschieden und aufgefangen werden. Das restliche Gas wird einem Kondensator zugeführt, wobei die kondensierbaren Bestandteile des Gases kondesiert werden. Die kondensierten Teile des Gases werden dann in eine Falle eingeführt, wobei die Anteile in flüssige Form überführt werden, um anschließend bezgl. ihrer Menge und Zusammensetzung ausgemessen werden zu können. Dieses Verfahren stellt das normale Gasanalysenverfahren dar, welches den Ausgangspunkt für die vorliegende Erfindung bildet.

In dem bekannten Verfahren ist jedoch kein Hinweis daruber enthalten, ob und wie das Verfahren zu einer Langzeitüberwachung eingesetzt werden kann. Für eine solche Langzeitüberwachung müßte das bekannte Verfahren ständig mit vollem Durchsatz arbeiten, was aus prozeßökonomischen Gründen sehr ungünstig wäre.

In der OE-A-2 853 615 ist ein reines Probenahmeherät beschrieben, dessen Wirkungsweise auf dem Zentrifugal- und Impaktionsprinzip beruht. Mit einem solchen Gerät kann ein kontinuierliches Meßverfhren nicht durchgeführt werden, da es Aufgabe der Probensammeleinrichtung gem. der Entgegenhaltung ist, die Nachteile eines bekannten Gerätes zu vermeiden.

Die vorliegende Erfindung hat daher zur Aufgabe, ein Verfahren zur Langzeitbestimmung und Dauerüberwachung des Schadstoffgehaltes von feststoffbeladenen Abgasströmen bzw. eine Langzeitprobennahme aus solchen Strömen von z.B. Müllverbrennungsanlagen, Großfeuerungen oder dergleichen unter isokinetischen, d.h. geschwindigkeitsgleichen Absaugbedingungen zu schaffen, die eine vollständige und kontinuierliche Bilanzierung der Schadstoffemissionen, wie z.B. von Schwermetallen, Dioxinen usw. gewährleistet. Das Verfahren soll für eine betriebliche Dauerüberwachung derartiger Schadstoffemissionen geeignet sein. Um z.B. den für Cadmium in der Nähe einer Müllverbrennungsanlage vorgeschriebenen Depositionswert einzuhalten, ist es zwingend geboten, zuverlässige Durchschnittswerte für die Cadmiumemission aus einer Anlage bereitzustellen.

Zur Losung schlägt nun die vorliegende Erfindung ein Verfahren mit den im Anspruch 1 genannten Verfahrensschritten vor. Ein zusätzlicher, weiterer vorteilhafter Verfahrensschritt ist im Anspruch 2 angegeben.

Der besondere Vorteil des erfindungsgemäßen Verfahrens besteht nun darin, daß für die kontinuierliche betriebliche Dauerüberwachung der Schadstoffemissionen die Feststoffabtrennung auf die erste Stufe z.B. des Gaszyklons beschränkt werden kann, da die Schadstoffverteilung durch vorangegangene Eichmessungen unter Einbeziehung des nachgeschalteten Filter- und Waschsystemes bekannt ist. Auf diese Weise ist eine lückenlose Bilanzierung der über das Rauchgas emittierten Schadstoffe jederzeit leicht möglich und durch Archivierung des langzeitig gesammelten Probenmaterials jederzeit durch Überwachungsbehörden nachprüfbar.

Weitere Einzelheiten des erfindungsgemäßen Verfahrens werden im folgenden anhand einer Figur näher erläutert:

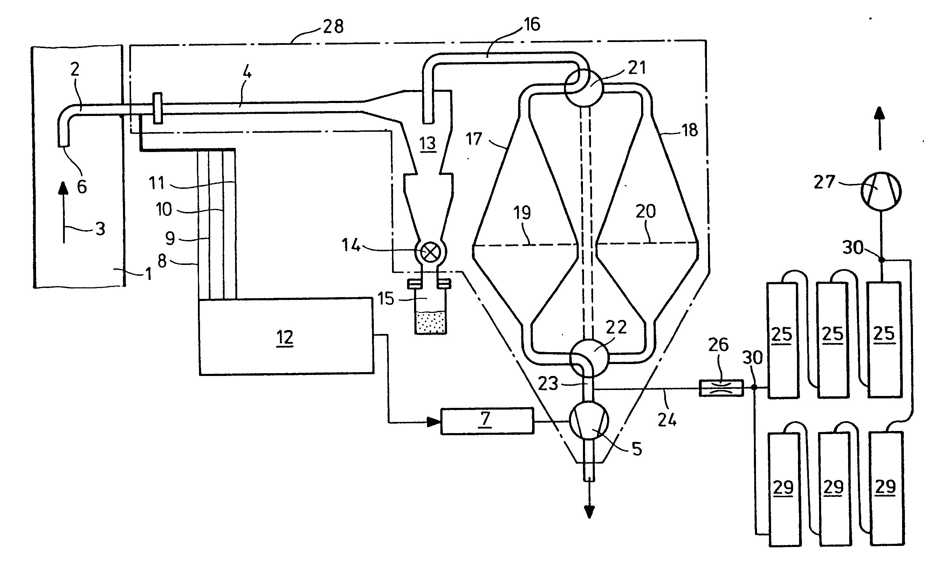

Die Figur zeigt das Schema einer Meßeinrichtung, mittels welcher das neue Verfahren durchgeführt werden kann.

In den Rauchgaskanal 1 eines Schadstoffemitters ragt eine Entnahmesonde bzw. ein Absaugstutzen 2, mittels welcher ein repräsentativer Teilstrom des Hauptgasstromes 3 entnommen werden soll. Die Entnahme erfolgt dabei isokinetisch bzw. geschwindigkeitsgleich, wobei der erforderliche Unterdruck in der Saugleitung 4 durch das Sauggebläse 5 erzeugt wird. Die geschwindigkeitsgleiche Einstellung der Entnahmegeschwindigkeit des Teilgasstromes an der Sondenmündung 6 erfolgt durch Drehzahlregelung des HF-Antriebsmotores 7 vom Sauggebläse 5 über eine Frequenzregelung. Eine isokinetische Regelung der Absaugung an der Sondenmündung 6 bedingt die 3 Druckmessungen $P_G$ Gesamtdruck 8, $pst_T$ statischer Druck des Teilgasstromes 9, $pst_H$ statischer Druck des Hauptgasstromes 10 sowie eine Temperaturmessung 11 (T) an der Sonde, um den momentanen Ist- Zustand in der unmittelbaren Umgebung der Entnahmestelle an der Sondenmündung 6 zu kennen. Die Drücke werden durch Schlitze oder Kanäle in der Sondenwand übertragen. Aus diesen Meßdaten erzeugt eine Meß- und Regeleinheit 12 die der erforderlichen Drehzahl des Sauggebläses 5 zugehörige Frequenz für den Antriebsmotor 7.

Die Absaugung erfolgt nun weiter aus der Saugleitung über z.B. einen beheizten Gaszyklon 13 zur kontinuierlichen Abscheidung der gröberen Feststofffanteile als erste Stufe. Diese werden über eine Taktschleuse 14 oder ein anderes Ausschleussystem aus dem, unter geringem Unterdruck stehenden System kontinuierlich in einen Sammelbehälter 15 ausgetragen. Der restliche, im Zyklon 13 nicht abscheidbare feindisperse Feststoff verläßt mit dem Gasstrom in der Leitung 16 den Gaszyklon 13 bzw. die erste Stufe und strömt wechselseitig umschaltbar durch z.B. die beiden Filtergehäuse 17 und 18, in welchen er ebenfalls fortlaufend auf den Feinstfiltern 19 und 20 (Planfilter) abgeschieden wird. Für einen quasi kontinuierlichen Langzeit- oder Dauerbetrieb sind deshalb zwei mittels der Hähne 21 und 22 umschaltbare Filter 19 und 20 vorgesehen, wobei der Filterwechsel alle 6 bis 12 Stunden erfolgen kann.

Nach der Feinfilterstufe als zweite Stufe mittels der Filter 19 und 20 ist in die Ableitung 23 eine Bypassleitung 24 geschaltet, über welche konstant eine kleine Teilstrommenge entnommen wird, die einer Gaswäsche (sauer, alkalisch) als dritte Stufe in ein oder mehreren, wechselseitig mittels der Hähne 30 umschaltbaren und mehrstufigen Kaskaden 25 und 29 unterzogen wird. In dieser werden lösliche, gasförmige Schadstoffe absorbiert bzw. ausgewaschen. Die mittels einer kleinen Pumpe 27 entnommene Teilstrommenge ist durch eine Strömungsdrossel 26 gegenüber der abgesaugten Gasmenge von z.B. 50 m$^3$ pro Stunde klein gehalten, um die isokinetische Regelung — Änderung der abgesaugten Gasfeststoffmenge durch sich im Rauchgaskanal 1 ändernde Strömungszustände — nicht zu beeinträchtigen.

Die Abscheideorgane 13, 17 und 18 sowie das Sauggebläse 5 und die Saugleitung 4 sind mit einer Heizung 28 versehen, um Taupunktunterschreitungen und damit Kondensation von gasförmig vorliegenden Schadstoffverbindungen im Bereich der Feststoffabtrennung zu vermeiden. Dies ist wichtig für eine eindeutige Unterscheidung zwischen feststoffgetragenen Schadstoffen und gasförmig im Rauchgas vorliegenden. Nach der Abscheidung gelangt der entnommene Teilgasluftstrom am Sauggebläse 5 bzw. hinter der Pumpe 27 wieder ins Freie.

## Patentansprüche

1. Verfahren zur Langzeitbestimmung und Dauerüberwachung des Schadstoffgehaltes von feststoffbeladenen Abgasströmen aus Großfeuerungen oder Müllverbrennungsanlagen mit isokonetischer Teilstromentnahme der Probe aus dem Rauchgasstrom mittels Untersruck sowie Abscheidung der Feststoffanteile unter Beheizung mit den folgenden Verfahrensschritten:

a) Kontinuierliche Abscheidung der größeren Feststoffe in einem Gaszyklon als erster Stufe,

b) Kontinuierliches Ausschleusen der abgeschiedenen Feststoffe aus dem Gaszyklon und Überführen derselben in Sammelbehälter,

c) Kontinuierliche Abscheidung der feinen Schwebstoffe in wechselseitig zuschaltbaren und auszuwechselnden Feinstfiltern,

d) kontinuierliche Absaugung einer gegenüber dem abgesaugten Gesamtstrom kleinen Teilstrommenge hinter dem Feinstfilter mit einer mehrstufigen und wechselseitigen zuschaltbaren Wäsche für die gasförmigen Schadstoffkomponenten,

e) Bestimmen der Schadstoffverteilung des Abgasstromes durch Eichmessungen des aus Sammelbehältern, Filtereinsätzen sowie der Waschstufen gem. Schritt d) gewonnenen Probenmaterials,

f) Beschränkung der kontinuierlichen Feststoffabtrennung nach Bestimmung der Schadstoffverteilung durch die vorangestellten Eichmessungen auf die erste Abscheidestufe gem. der Schritte a) und b).

2. Verfahren nach Anspruch 1 mit dem weiteren Verfahrensschritt

g) Beheizung der einzelnen Stufen der Abscheideorgane sowie des Sauggebläses und der Saugleitung.

## Revendications

1. Procédé pour déterminer pendant une longue période et pour surveiller en permanence la teneur en substances nocives de gaz d'échappement chargés de particules solides en provenance de grandes chaufferies ou d'installations d'incinération d'ordures, procédé comportant le prélèvement d'un écoulement partiel isocinétique d'échantillonnage sous dépression à partir de l'écoulement des gaz de fumée, ainsi que la séparation des particules solides sous chauffage avec les étapes suivantes du procédé:

a) séparation en continu des particules solides les plus importantes dans un cyclone à gaz constituant un premier échelon,

b) éclusage en continu hors du cyclone à gaz des particules solides ainsi séparées et transfert de ces particules dans un récipient collecteur,

c) séparation en continu des substances en suspension sur des filtres très fins susceptibles d'être alternativement branchés et remplacés,

d) aspiration en continu derrière le filtre partiel d'une quantité d'écoulement partiel réduite par rapport à l'écoulement total aspiré, accompagnée d'un lavage à plusieurs paliers pouvant être mis en oeuvre successivement pour les substances nocives gazeuses,

e) détermination de la répartition des substances nocives de l'écoulement de gaz d'échappement par des mesures d'étalonnage du matériau d'échantillonnage obtenu à partir des récipients collecteurs, des dispositifs de filtration, ainsi que des paliers de lavage selon l'étape d)

f) limitation de la séparation continue des particules solides au premier échelon de séparation selon les étapes a) et b) après détermination de la répartition des substances nocives par les mesures d'étalonnage précitées.

2. Procédé selon la revendication 1, caractérisé en ce qu'il comporte l'étape supplémentaire suivante:

g) chauffage des différents échelons des organes de séparation ainsi que du ventilateur d'extraction et de la canalisation d'extraction.

## Claims

1. Method for the long-term determination and constant monitoring of the pollutant content in streams of waste gases charged with solid materials and issuing from large furnaces or refuse incinerators, including the isokinetic sampling of partial streams from the (main) stream of flue gas by means of a vacuum or low pressure and the separation of the solid components by means of a heating process, comprising the following method steps:

a) continuous separation of the larger solid materials in a gas cyclone as the first stage;

b) continuous discharge of the separated solid materials from the gas cyclone and transfer thereof into storage tanks;

c) continuous separation of the fine suspended substances in micropore filters which are alternately connectable and are to be replaced;

d) continuous removal by suction of a small amount of the partial stream compared with the total partial stream downstream of the micropore filter, combined with a multistage and alternately connectable washing process for the gaseous pollutant components;

e) determination of the pollutant distribution in the stream of waste gas by taking calibrated measurements of the sample material obtained from storage tanks, filter inserts and the washing stages according to step d);

f) limitation of the continuous separation of solid materials, after determination of the pollutant distribution by the previously utilised calibrated measurements, to the first separation stage according to steps a) and b).

2. Method according to claim 1, comprising the additional method step:

g) heating of the individual stages of the separating means as well as the suction fan and the suction pipe.